# EUROPÄISCHE PATENTANMELDUNG

(11) **EP 2 172 390 A1**
(43) Veröffentlichungstag der Anmeldung: **07.04.2010**
(21) Anmeldenummer: 08405255.4
(22) Anmeldetag: 06.10.2008
(51) Int. Cl.: B62D 57/024

(54) **Mobiler Kletterroboter und Serviceanlage mit Kletterroboter**

(71) Anmelder: Niederberger Engineering AG, 6370 Oberdorf (CH)
(72) Erfinder: Niederberger, Anton, 6370 Oberdorf (CH)
(74) Vertreter: Nückel, Thomas

(57) **Zusammenfassung**

Der erfindungsgemäße mobile Kletterroboter (15) umfasst ein Zentralgelenk (3), über das ein erstes Bein (1) mit einem zweiten Bein (2) verbunden ist. Zudem umfasst der Roboter einen ersten Fuss (8), der über ein erstes Fussgelenk zum Drehen (5) und ein erstes Fussgelenk zum Kippen (4) mit dem ersten Bein (1) verbunden ist. Ein zweiter Fuss (9) ist über ein zweites Fussgelenk zum Drehen (7) und ein zweites Fussgelenk zum Kippen (6) mit dem zweiten Bein (2) verbunden. Am ersten Fuss (8) ist eine Halterung (11) zum Befestigen eines Arbeitsgeräts (10; 12) angeordnet.

## Beschreibung

### Technisches Gebiet

Die Erfindung betrifft einen mobilen Kletterroboter sowie eine Serviceanlage mit Kletterroboter, welche beispielsweise für die Reinigung eine Fassade eines Gebäudes verwendbar sind.

### Stand der Technik

Aus der Druckschrift CH 670 248 A5 ist eine Anordnung mit einer vertikal verfahrbaren Kabine zum Arbeiten an Konstruktionen mit gekrümmter oder ebener Oberfläche bekannt. Die Anordnung dient insbesondere zum Arbeiten an großen Flächen, wie Kühltürmen, Staumauern, Schiffswänden und dergleichen. Die Anordnung umfasst dazu eine Kabine, die mit einem Raupenantrieb mit Saugnäpfen ausgestattet ist. Mit Hilfe des Raupenantriebs kann die Kabine an der Fassade des Gebäudes entlang bewegt werden, wobei die Saugnäpfe dazu dienen, die Haftung zwischen dem Raupenantrieb und der Fassade des Gebäudes zu vergrößern. Der Einsatz des Raupenantriebs ist jedoch auf glatte Oberflächen beschränkt, deren Krümmung relativ klein ist. Treppen und Stufen in der Fassade können mit dem Raupenantrieb nicht oder nicht ohne weiteres überwunden werden.

Aus der Druckschrift US 5 551 525 ist ein Kletterroboter mit einem vorderen und einem hinteren Bein bekannt. Die beiden Beine sind über ein Kniegelenk miteinander verbunden und haben jeweils ein drehbares Fußgelenk. Ein derartiger Roboter kann zwar Stufen in der Gebäudefassade überwinden, ist aber für die autonome Gebäudereinigung nur beschränkt einsetzbar, da dessen Bewegungsfreiheit nicht ausreichend ist.

### Darstellung der Erfindung

Eine Aufgabe der Erfindung ist es, einen mobilen Kletterroboter anzugeben, der an beliebigen Flächen, wie beispielsweise gekrümmten und abgewinkelten Flächen, Überhängen und Decken, entlang klettern und Stufen überwinden kann.

Die Aufgabe wird durch einen mobilen Kletterroboter mit den Merkmalen gemäß Patentanspruch 1 gelöst.

Der erfindungsgemäße mobile Kletterroboter umfasst ein Zentralgelenk, über das ein erstes Bein mit einem zweiten Bein verbunden ist. Zudem weist der Roboter einen ersten Fuß auf, der über ein erstes Fußgelenk zum Drehen und ein erstes Fußgelenk zum Kippen mit dem ersten Bein verbunden ist. Des Weiteren ist ein zweiter Fuß vorgesehen, der über ein zweites Fußgelenk zum Drehen und ein zweites Fußgelenk zum Kippen mit dem zweiten Bein verbunden ist. Schließlich weist der mobile Kletterroboter eine am ersten Fuß angeordnete Halterung zum Befestigen eines Arbeitsgerätes auf.

Vorteilhafte Weiterbildungen der Erfindung ergeben sich aus den in den abhängigen Patentansprüchen angegebenen Merkmalen.

Bei einer Ausführungsform des erfindungsgemäßen Kletterroboters sind das erste und das zweite Bein seitlich zueinander versetzt. Das hat den Vorteil, dass die beiden Beine aneinander vorbei bewegt werden können und somit eine größtmögliche Bewegungsfreiheit erreicht wird.

Bei einer weiteren Ausführungsform des erfindungsgemäßen Kletterroboters sind der erste und/oder der zweite Fuß mit einem Saugnapf ausgestattet. Dadurch lässt sich die Haftung des Kletterroboters auf dem Untergrund, auf dem sich der Kletterroboter bewegt, vergrößern.

Alternativ oder zusätzlich dazu kann der erste und/oder der zweite Fuß des Kletterroboters mit einem Magneten ausgestattet sein. Dies ist insbesondere dann von Vorteil, wenn sich der Kletterroboter auf einer metallischen, magnetischen Oberfläche bewegen soll. Mit Hilfe des Magneten lässt sich der Grad der Haftung des Fußes beziehungsweise der Füße auf der metallischen Oberfläche auf einfache Art und Weise steuern. Dazu ist der Magnet vorteilhafter Weise als schaltbarer Elektromagnet ausgebildet.

Darüber hinaus kann bei dem erfindungsgemäßen Kletterroboter der erste und/oder der zweite Fuß mit einer Kralle ausgestattet sein. Dies ist insbesondere dann von Vorteil, wenn der Kletterroboter sich über eine unebene Fläche, beispielsweise eine stark strukturierte Oberfläche, bewegen soll.

Zur Lösung der Aufgabe wird ferner vorgeschlagen, dass bei dem erfindungsgemäßen Kletterroboter der erste und/oder der zweite Fuß mit einer Bohrvorrichtung ausgestattet sind. Damit kann sich der Roboter selbst Stellen auf der Oberfläche jenes Objekts, an dem er sich bewegen soll, schaffen, um sich an diesen Stellen festhalten zu können. Die Bohrvorrichtung kann aber auch dazu verwendet werden, um Arbeiten an der Oberfläche des Objekts vorzunehmen. So kann der Roboter damit beispielsweise an schwer zugänglichen Stellen einer Fassade eines Gebäudes Löcher in die Wand des Gebäudes bohren.

Nach einem weiteren Merkmal der Erfindung kann diese noch weiter verbessert werden, indem der Kletterroboter mit elektrischen oder hydraulischen Antrieben zum Bewegen der Beine und/oder der Füße ausgestattet ist.

Bei einer weiteren Ausführungsform des erfindungsgemäßen Kletterroboters ist als Arbeitsgerät ein Reinigungsgerät vorgesehen. Mit Hilfe des Reinigungsgerätes kann der Roboter dann autonom beispielsweise die Fassade des Gebäudes, den Rumpf oder den Aufbau eines Schiffes oder die Oberfläche einer Solar- oder Fotovoltaikanlage reinigen.

Zudem wird eine Serviceanlage mit dem oben beschriebenen Kletterroboter für eine Oberfläche eines Objekts, wie beispielsweise die Fassade eines Gebäudes, vorgeschlagen. Die Serviceanlage weist dazu eine Versorgungsstation zum Versorgen des Kletterroboters auf. Zudem umfasst die Serviceanlage eine Winde, die am Objekt angebracht werden kann, um die Versorgungsstation abzuseilen und um den Kletterroboter zu sichern.

Bei einer Weiterbildung der Serviceanlage ist vorgesehen, dass die Versorgungsstation eine Steuerungseinheit für die Steuerung des Kletterroboters umfasst.

Zudem kann die Versorgungsstation der Serviceanlage einen Vorratsbehälter für Reinigungsmittel umfassen.

Bei einer weiteren Ausführungsform der Serviceanlage ist vorgesehen, dass die Versorgungsstation eine Energiequelle für den Antrieb des Kletterroboters umfasst.

Schließlich kann die Serviceanlage mit einer am Kletterroboter angebrachten Kamera ausgestattet sein und einen Bildschirm zum Anzeigen der von der Kamera gelieferten Informationen aufweisen. Zudem kann die Serviceanlage mit einer Bedieneinheit zum Steuern des Kletterroboters ausgestattet sein.

### Kurze Beschreibung der Zeichnungen

Im Folgenden wird die Erfindung mit mehreren Ausführungsbeispielen anhand von 13 Figuren weiter erläutert.
- Figur 1: zeigt eine erste mögliche Ausführungsform des erfindungsgemäßen mobilen Kletterroboters in einer dreidimensionalen Ansicht.
- Figur 2: zeigt eine zweite mögliche Ausführungsform des erfindungsgemäßen mobilen Kletterroboters in einer dreidimensionalen Ansicht.
- Figur 3: zeigt eine erste mögliche Bewegungsart des Kletterroboters.
- Figur 4: zeigt eine zweite mögliche Bewegungsart des Kletterroboters.
- Figur 5: zeigt den Bewegungsablauf des Kletterroboters beim Überwinden einer Stufe und eines Überhangs.
- Figur 6: zeigt den Kletterroboter beim Reinigen einer Fläche ohne die Drehgelenke an den Füßen zu verwenden.
- Figur 7: zeigt den Kletterroboter nochmals beim Reinigen einer Fläche, wobei hier die Drehgelenke an den Füßen benutzt werden.
- Figur 8: zeigt den Kletterroboter beim Reinigen eines Ecks und einer Fläche.
- Figur 9: zeigt den Kletterroboter beim Reinigen einer größeren Fläche.
- Figur 10: zeigt den Kletterroboter erneut beim Reinigen eines Ecks und einer größeren Fläche.
- Figur 11: zeigt einen weiteren möglichen Bewegungsablauf des Kletterroboters, um eine Fläche zu reinigen.
- Figur 12: zeigt den Kletterroboter zusammen mit mehreren Signalgebern zur Steuerung des Kletterroboters.
- Figur 13: zeigt die Serviceanlage mit dem Kletterroboter an der Fassade eines Gebäudes in einer dreidimensionalen Ansicht.

### Wege zur Ausführung der Erfindung

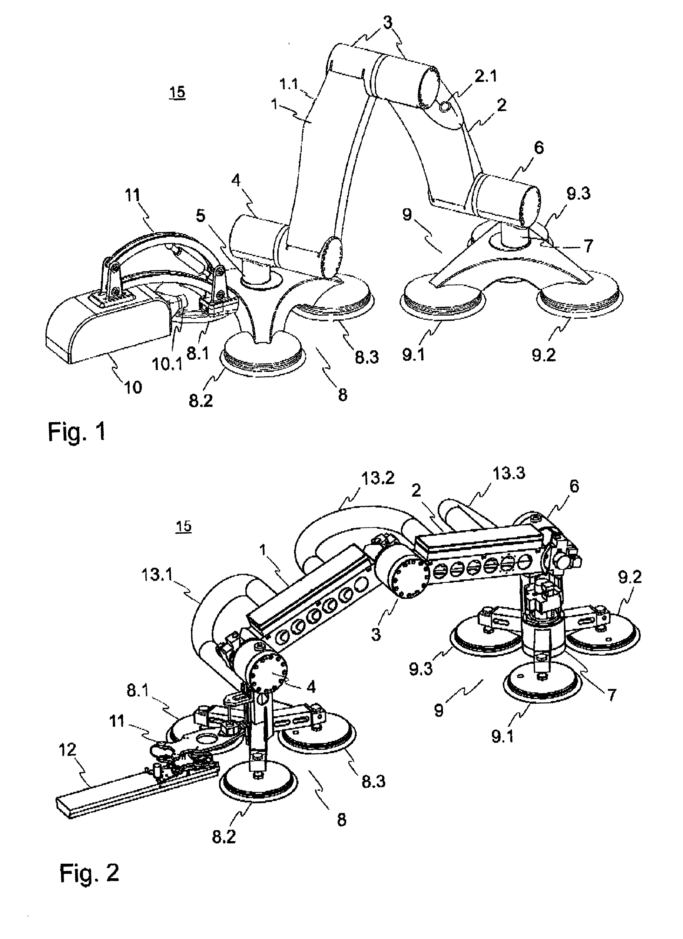

In Figur 1 ist eine erste mögliche Ausführungsform des erfindungsgemäßen mobilen Kletterroboters 15 gezeigt. Der Kletterroboter 15 umfasst zwei Beine 1 und 2, die über ein gemeinsames Gelenk 3 miteinander verbunden sind. Das Gelenk 3 ist dabei derart zwischen den Beinen 1 und 2 angeordnet und ausgebildet, dass die Beine 1 und 2 seitlich zueinander versetzt sind. Das hat den Vorteil, dass die beiden Beine 1 und 2 aneinander vorbei bewegt werden können, so dass der Roboter sich ähnlich wie ein Mensch schreitend fortbewegen kann.

Das erste Bein 1 ist über ein erstes Fußgelenk zum Kippen 4 und ein erstes Fußgelenk zum Drehen 5 mit einem ersten Fuß 8 verbunden. Der Fuß 8 weist einen ersten Saugnapf 8.1, einen zweiten Saugnapf 8.2 und einen dritten Saugnapf 8.3 auf. Die Saugnäpfe 8.1, 8.2 und 8.3 sind steuerbar und dienen dazu, die Haftung auf einer ebenen Fläche ausreichend groß zu machen, so dass der Roboter 15 dort sicher haftet. Des Weiteren ist am ersten Fuß 8 eine schwenkbare Gerätehalterung 11 vorgesehen, die am Ende ein Reinigungsgerät 10 trägt. Das Reinigungsgerät 10 kann beispielsweise eine Saugvorrichtung sein. Die Saugvorrichtung weist einen Absauganschluss 10.1 auf, der mit einem nicht gezeigten Schlauch verbindbar ist. Das Reinigungsgerät 10 kann aber auch einen Schwamm enthalten, der über den Anschluss 10.1 mit einem Reinigungsmittel versorgt wird.

Das zweite Bein 2 ist über ein zweites Fußgelenk zum Kippen 6 und einem zweiten Fußgelenk zum Drehen 7 mit einem zweiten Fuß 9 verbunden. Der zweite Fuß 9 weist ebenso wie der erste Fuß 8 einen ersten Saugnapf 9.1, einen zweiten Saugnapf 9.2 und einen dritten Saugnapf 9.3 auf.

In die Gelenke 3, 4, 5, 6 und 7 sind elektrische, hydraulische oder pneumatische Antriebe integriert.

In das Gehäuse der beiden Beine 1 und 2 können Leitungen integriert sein. Bei der in Figur 1 gezeigten Ausführungsform des Roboters sind diese Leitungen am Bein 1 mit einem Anschluss 1.1 und am zweiten Bein mit einem Anschluss 2.1 aus den Beinen herausgeführt. Die Leitungen sind über Anschlüsse 1.1 und 2.1 und eine in Figur 1 nicht gezeigte eine Schlauchleitung miteinander verbindbar. Diese Leitungen sind als Versorgungs- und/oder Entsorgungsleitungen benutzbar. Über die Leitungen kann beispielsweise das vom Reinigungskopf 10 abgesaugte Material abtransportiert werden oder der Reinigungskopf 10 mit Reinigungsmittel versorgt werden.

In einer Ausführungsform sind die Saugnäpfe 8.1 bis 9.3 so ausgebildet, dass sie, sobald sie auf eine ebene Fläche gedrückt werden, sich selbsttätig dort festsaugen.

Der in Figur 2 gezeigte mobile Reinigungsroboter 15 unterscheidet sich von dem in Figur 1 gezeigten Reinigungsroboter dadurch, dass er einen ersten Schlauch oder eine erste Rohrleitung 13.1, einen zweiten Schlauch oder eine zweite Rohrleitung 13.2 und einen dritten Schlauch oder eine dritte Rohrleitung 13.3 aufweist. Über die Schläuche 13.1, 13.2 und 13.3 sind die Antriebe in den Gelenken 3, 4, 5, 6 und 7 mit Hydraulikflüssigkeit oder Druckluft versorgbar. Die Hydraulikflüssigkeit beziehungsweise Druckluft dient zur Energieversorgung der Antriebe. An der Halterung 11 ist ein Arbeitsgerät 12, welches als Wischer ausgebildet ist, befestigt.

Wie aus den beiden Figuren 1 und 2 zu entnehmen ist, kann der Fuß 8 mit verschiedenen Arbeitsgeräten 10, 12 bestückt werden.

Der Reinigungsroboter 15 ist geeignet, um autonom Gebäudefassaden trocken oder nass zu reinigen oder um Arbeiten an schwer zugänglichen Stellen eines Gebäudes, wie beispielsweise einem Kühlturm oder einem Hochhaus, durchzuführen. Zudem ist der Reinigungsroboter 15 auch dazu geeignet, den Rumpf und den Aufbau eines Schiffes oder die Oberfläche einer Solaranlage oder einer Fotovoltaikanlage zu reinigen.

Statt des Reinigungsgeräts kann am Fuß 8 auch eine Bohrvorrichtung befestigt werden. Mit dieser ist der Roboter 15 imstande, selbstständig Löcher in die Oberfläche des Objekts, an dem er sich festhalten soll, zu bohren, um sich dort selbsttätig Haltepunkte zu schaffen. Die Haltepunkte können dem Roboter dazu dienen, mehr Halt am Objekt zu gewinnen. Das Objekt kann beispielsweise ein Gebäude, eine Brücke oder ein Schiff sein. Die Bohrvorrichtung kann aber auch dazu benutzt werden, um Löcher für andere Zwecke in das Mauerwerk des Gebäudes zu bohren.

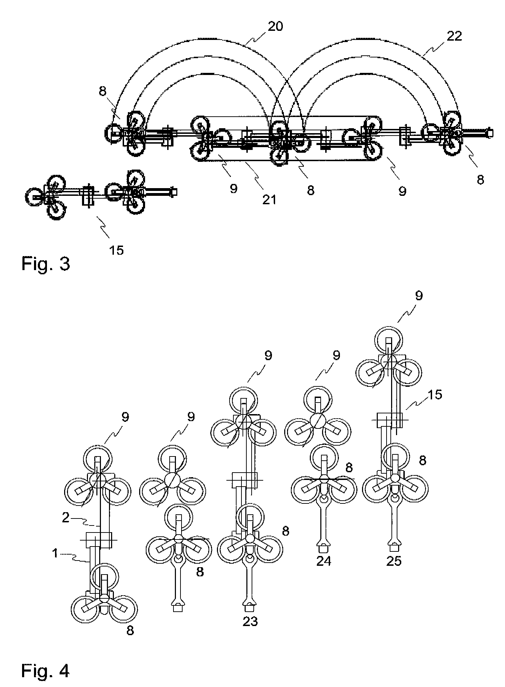

In Figur 3 sind zwei Bewegungsmöglichkeiten des Roboters 15 grafisch dargestellt. In einem ersten Schritt 20 dreht sich der Roboter 15 mit dem Drehgelenk 7 um den Fuß 9, so dass der Fuß 8 eine kreisförmige Bewegung beschreibt. In Figur 3 ist diese Bewegung in der Zeichnungsebene als erster Schritt 20 dargestellt. In einem zweiten Schritt 21 wird der Fuß 9 vom Untergrund gelöst und in einem 180°-Bogen über den ersten Fuß 8 hinweggeschwenkt (senkrecht zur Zeichnungsebene). Anschließend saugt sich der Fuß 9 wieder am Untergrund fest. In einem dritten Schritt 22 wird nun wieder der Fuß 8 in einer kreisförmigen Bewegung um den Fuß 9 herumgeschwenkt. Dazu wird wieder im Wesentlichen das Drehgelenk 7 benutzt.

Der mobile Roboter 15 kann aber auch einen wie in Figur 4 gezeigten Bewegungsablauf durchführen. In einem ersten Schritt 23 wird das Bein mit dem Fuß 9 vom Untergrund gelöst und, wie in Figur 4 gezeigt, in der Zeichnungsebene nach oben bewegt, indem die beiden Beine 1 und 2 auseinander bewegt werden. Dann saugt sich der Fuß 9 am Untergrund fest und in einem nächsten Schritt 24 wird der Fuß 8 nachgezogen. Sobald der Fuß 8 wieder auf dem Untergrund festgesaugt ist, erfolgt der nächste Schritt 25, der vom Bewegungsablauf her dem Schritt 23 entspricht.

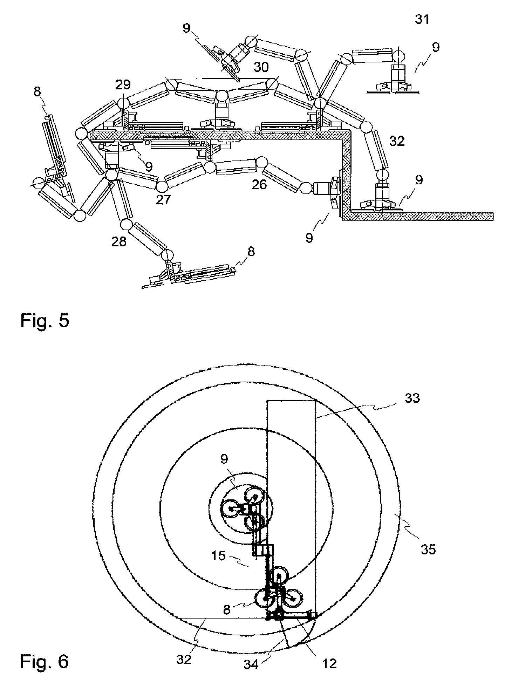

In Figur 5 ist der Bewegungsablauf des Roboters 15 beim Überwinden eines Überhangs (Schritte 26, 27, 28 und 29) und beim Überwinden einer Stufe (Schritte 30, 31 und 32) gezeigt.

In Figur 6 ist der Aktionsradius des Roboters 15 beim Reinigen gezeigt. Bei dem in Figur 6 gezeigten Bewegungsablauf bleibt der Fuß 9 stehen und der Fuß 8 mit dem Reinigungsgerät 12 wird beispielsweise kreisförmig entlang der Reinigungsfläche 35 geführt, indem sich der Roboter 15 mit dem Drehgelenk 7 um den Fuß 9 dreht. Stattdessen kann das Reinigungsgerät 12 aber auch entlang einer geradlinigen Bahn 33 bewegt werden. Dazu werden die Kippgelenke 4 und 6 und das Zentralgelenk 3 benutzt. Mehrere solcher geradliniger Reinigungsbahnen 33 können parallel nebeneinander angeordnet werden. Die Grundlinie 32 soll dies andeuten.

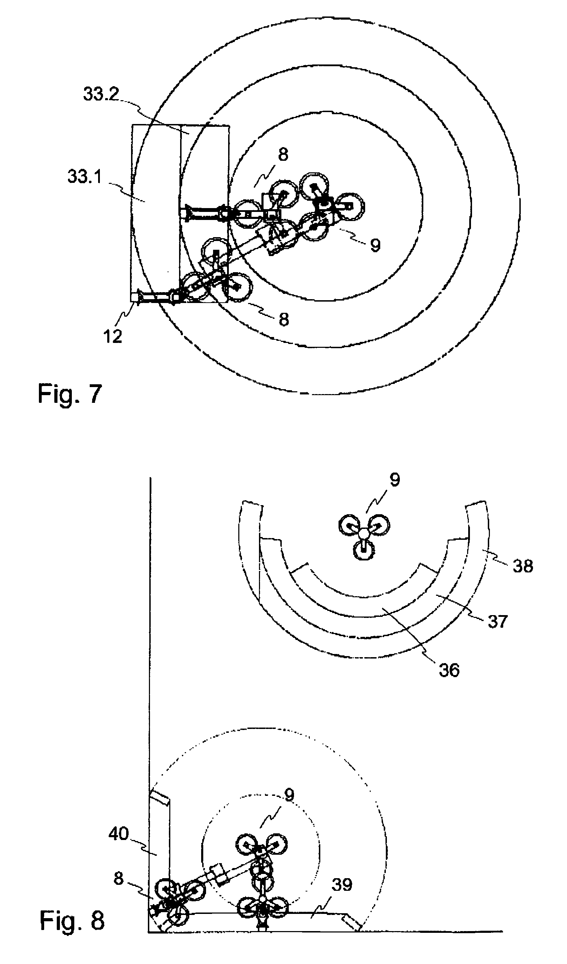

In Figur 7 ist ein weiteres Bewegungsmuster des mobilen Kletterroboters 15 gezeigt. So kann der Roboter beispielsweise zwei parallel nebeneinander angeordnete geradlinige Bahnen 33.1 und 33.2 erzeugen. Der Roboter 15 dreht sich dazu mit dem Drehgelenk 7 um den Fuß 9 und gleichzeitig wird mit den Zentralgelenk 3 und dem Drehgelenk 5 die Stellung des Fußes 8 angepasst.

Anhand der Figuren 8, 9 und 10 werden im Folgenden verschiedene mögliche Bewegungsmuster des Roboters 15 erläutert, die er durchführen kann, um die Fassade eines Gebäudes zu reinigen.

In Figur 8 ist eine Ecke eines Gebäudes gezeigt, wobei sich der Reinigungsroboter 15 in der Nähe dieser Ecke befindet. Sobald der Fuß 9 sicher an der Gebäudefassade haftet, kann mit dem Reinigungsvorgang begonnen werden. Der Roboter kann dazu in einem ersten Schritt eine Fläche 39 parallel zur Unterkante des Gebäudes reinigen und in einem zweiten Schritt eine Fläche 40, die parallel zur senkrechten Gebäudekante ist. Anschließend wird der Fuß 8 mit der Reinigungsvorrichtung 12 etwas mehr zum Fuß 9 hinbewegt und erneut mit der waagerechten und senkrechten Reinigung der Gebäudefläche fortgefahren. Weiter oben in Figur 8 ist ein weiteres Bewegungsmuster des Reinigungsroboters im Prinzip dargstellt. So kann der Roboter auch Kreissegmente 36, 37 und 38 reinigen.

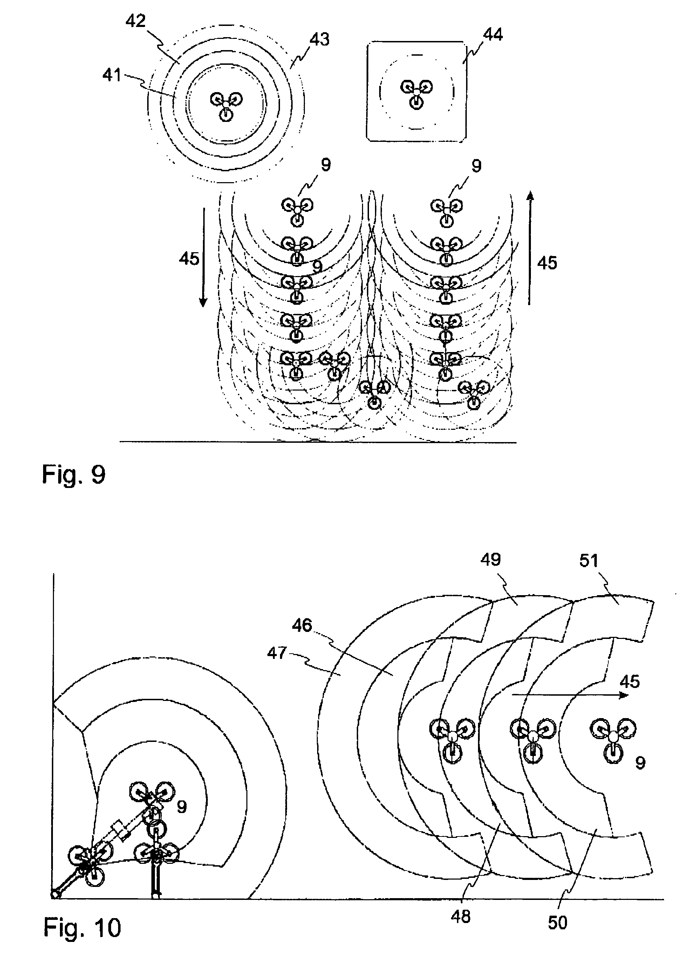

Um eine größere Fläche an der Fassade eines Gebäudes zu reinigen, kann der Roboter 15, wie in Figur 9 mit den Pfeilen 45 angedeutet, bewegt werden und dabei mit sich überlappenden, kreisförmigen Bewegungen die Fassade reinigen. Durch die spezielle Geometrie des Roboters 15 kann erreicht werden, dass er sowohl kreisförmige Reinigungsbahnen 41, 42 und 43 als auch quadratische oder rechteckige Reinigungsbahnen 44 erzeugen kann.

In Figur 10 ist gezeigt, wie der Roboter, nachdem er eine Ecke der Fassade gereinigt hat, die Reinigung in der Nähe der Ecke mit kreisbogenförmigen Reinigungsbahnen fortsetzt. Im rechten Bereich der Figur 10 ist gezeigt, wie sich einzelne Reinigungsbahnen 46 bis 51 überlappen können, wenn der Reinigungsroboter kreisbogenförmige Reinigungsbahnen 46 bis 51 erzeugt.

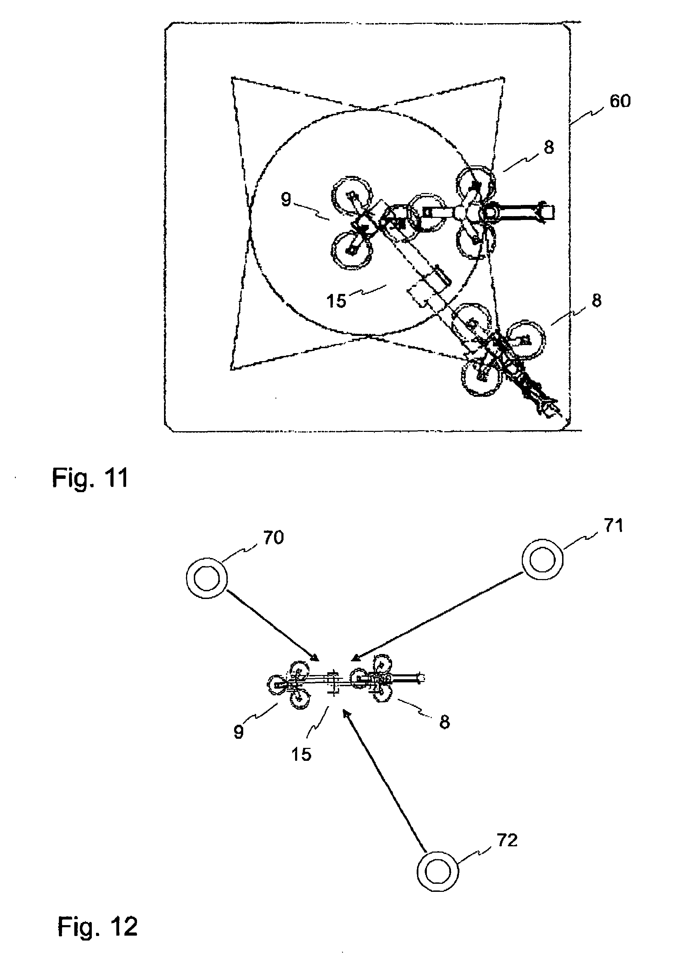

Der Reinigungsroboter 15 kann aber auch, wie dies in Figur 11 gezeigt ist, eine quadratische Fläche 60 reinigen.

Befindet sich, wie in Figur 12 gezeigt, der Roboter 15 auf einer großen Fläche, beispielsweise der Fassade eines Gebäudes, können mehrere Signalgeber 70, 71 und 72 an verschiedenen Stellen des Gebäudes vorgesehen sein, um dem Roboter 15 Steuersignale und Positionssignale zu übermitteln.

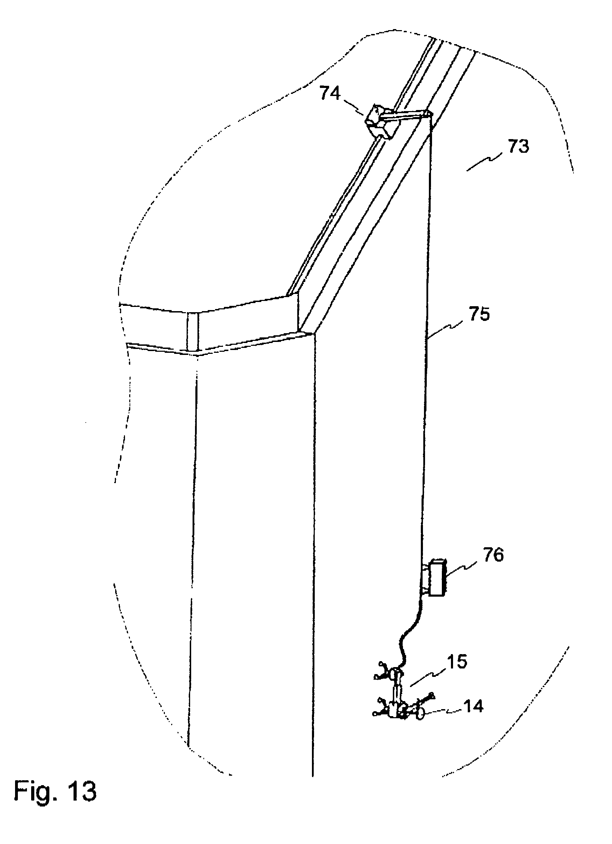

In Figur 13 ist in einer dreidimensionalen Ansicht ein Teil eines Gebäudes 73 gezeigt, wobei der Reinigungsroboter 15 Teil einer Serviceanlage ist. Die Serviceanlage umfasst eine Winde 74, die im oberen Bereich des Gebäudes 73 entlang des Gebäudes beweglich angeordnet ist. Die Winde 74 dient zum Abseilen einer Versorgungsstation 76. Die Versorgungsstation 76 kann beispielsweise eine Energiequelle für den Antrieb des Roboters 15 und einen Vorratsbehälter für Reinigungsmittel umfassen. Das Seil 75 dient zum Halten der Versorgungseinrichtung 76 und als Sicherungsseil für den Roboter 15. Der Roboter 15 kann zusätzlich mit einer Kamera 14 ausgestattet sein, über die Informationen über die Position des Roboters gewonnen werden können. Die Kamera 14 kann aber auch dazu verwendet werden, um Informationen über den Zustand der Fassade zu gewinnen.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. So sind beispielsweise die in den Figuren 8, 9 und 10 erläuterten Bewegungsmuster auch bei anderen Objekten, wie beispielweise Schiffen und Solaranlagen anwendbar.

### Bezugszeichenliste

- 1: erstes Bein
- 2: zweites Bein
- 3: Zentralgelenk
- 4: erstes Fussgelenk zum Drehen
- 5: erstes Fussgelenk zum Kippen
- 6: zweites Fussgelenk zum Drehen
- 7: zweites Fussgelenk zum Kippen
- 8: erster Fuss
- 8.1: erster Saugnapf
- 8.2: zweiter Saugnapf
- 8.3: dritter Saugnapf
- 9: zweiter Fuss
- 9.1: erster Saugnapf
- 9.2: zweiter Saugnapf
- 9.3: dritter Saugnapf
- 10: Reinigungsgerät
- 11: Gerätehalterung
- 12: Wischer
- 13.1: erster Schlauch
- 13.2: zweiter Schlauch
- 13.3: dritter Schlauch
- 14: Kamera
- 15: Kletterroboter
- 20: erster Schritt
- 21 - 31: Schritte
- 32: Grundlinie
- 33.1: Reinigungsfläche
- 33.2: Reinigungsfläche
- 34: Stellung des Reinigungsgeräts
- 35 - 40: Reinigungsflächen
- 45: Bewegungsrichtung
- 46 - 51: Reinigungsflächen
- 60: Reinigungsfläche
- 70: Signalgeber
- 71: Signalgeber
- 72: Signalgeber
- 73: Gebäude
- 74: Winde
- 75: Seil
- 76: Versorgungsstation

## Patentansprüche

1. Mobiler Kletterroboter,
- mit einem Zentralgelenk (3), über das ein erstes Bein (1) mit einem zweiten Bein (2) verbunden ist,
- mit einem ersten Fuss (8), der über ein erstes Fussgelenk zum Drehen (4) und ein erstes Fussgelenk zum Kippen (5) mit dem ersten Bein (1) verbunden ist,
- mit einem zweiten Fuss (9), der über ein zweites Fussgelenk zum Drehen (6) und ein zweites Fussgelenk zum Kippen (7) mit dem zweiten Bein (2) verbunden ist, und
- mit einer am ersten Fuss (8) angeordneten Halterung (11) zum Befestigen eines Arbeitsgeräts (10; 12).

2. Kletterroboter nach Patentanspruch 1, bei dem das erste Bein (1) und das zweite Bein (2) seitlich zueinander versetzt sind.

3. Kletterroboter nach Patentanspruch 1 oder 2, bei dem der erste und/oder der zweite Fuss (8, 9) mit einem Saugnapf (8.1, 9.1) ausgestattet sind.

4. Kletterroboter nach Patentanspruch 1, 2 oder 3, bei dem der erste und/oder der zweite Fuss (8, 9) mit einem Magneten ausgestattet sind.

5. Kletterroboter nach einem der Patentansprüche 1 bis 4,
bei dem der erste und/oder der zweite Fuss (8, 9) mit einer Kralle ausgestattet sind.

6. Kletterroboter nach einem der Patentansprüche 1 bis 5,
bei dem der erste und/oder der zweite Fuss (8, 9) mit einer Bohrvorrichtung ausgestattet sind.

7. Kletterroboter nach einem der Patentansprüche 1 bis 6,
- bei dem Antriebe zum Bewegen der Beine (1, 2) und der Füsse (8, 9) vorgesehen sind, und
- bei dem die Antriebe als elektrische oder hydraulische Antriebe ausgebildet sind.

8. Kletterroboter nach einem der Patentansprüche 1 bis 7,
bei dem das Arbeitsgerät (10; 12) ein Reinigungsgerät ist.

9. Verwendung des Kletterroboters nach einem der Patentansprüche 1 bis 8, zum Reinigen eines Objekts.

10. Verwendung des Kletterroboters nach Patentanspruch 9, bei dem das Objekt ein Gebäude, eine Brücke, ein Schiff oder eine Solaranlage ist.

11. Serviceanlage mit einem Kletterroboter nach einem der Patentansprüche 1 bis 10,
- mit einer Versorgungsstation (76) zum Versorgen des Kletterroboters (15), und
- mit einer am Objekt (73) angeordneten Winde (74) zum Abseilen der Versorgungsstation (76) und zum Sichern des Kletterroboters (15).

12. Serviceanlage nach Patentanspruch 11, bei der die Versorgungsstation (76) eine Steuerungseinheit für die Steuerung des Kletterroboters (15) umfasst.

13. Serviceanlage nach Patentanspruch 11 oder 12,
bei der die Versorgungsstation (76) einen Vorratsbehälter für Reinigungsmittel umfasst.

14. Serviceanlage nach einem der Patentansprüche 11 bis 13,
bei der die Versorgungsstation (76) eine Energiequelle für den Antrieb des Kletterroboters (15) umfasst.

15. Serviceanlage nach einem der Patentansprüche 11 bis
14,
- mit einer am Kletterroboter (15) angebrachten Kamera,
- mit einem Bildschirm zum Anzeigen der von der Kamera gelieferten Informationen, und
- mit einer Bedieneinheit zum Steuern des Kletterroboters (15).
